## Europäisches Patentamt
## European Patent Office
## Office européen des brevets

(19)

(11) Veröffentlichungsnummer: **0 199 227**
**B1**

(12) # EUROPÄISCHE PATENTSCHRIFT

(45) Veröffentlichungstag der Patentschrift:
25.10.89

(51) Int. Cl.⁴: **D 06 L 1/12**

(21) Anmeldenummer: **86105040.9**

(22) Anmeldetag: **12.04.86**

---

(54) **Verfahren zum Entfernen von auf Fasern, Garnen oder flächigen textilen Materialien befindlichen Siliconen.**

---

(30) Priorität: **26.04.85 DE 3515077**

(43) Veröffentlichungstag der Anmeldung:
**29.10.86 Patentblatt 86/44**

(45) Bekanntmachung des Hinweises auf die Patenterteilung:
**25.10.89 Patentblatt 89/43**

(84) Benannte Vertragsstaaten:
**BE FR GB IT NL**

(56) Entgegenhaltungen:
**CHEMICAL ABSTRACTS, Band 93, Nr. 20, 17. November 1980, Seite 67, Zusammenfassung Nr. 187706x, Columbus, Ohio, US; & JP - A - 80 76160 (MEISEI CHEMICAL WORKS LTD.) 09.06.1980**

(73) Patentinhaber: **Hansa Textilchemie GmbH, Rudolf-Diesel- Strasse 19- 21, D-2806 Oyten 1 (DE)**

(72) Erfinder: **Nickel, Friedhelm, Osterholzer Dorfstrasse 85, D-2800 Bremen 44 (DE)**

(74) Vertreter: **Perret, Georg, Dr., Th. Goldschmidt AG Patentabteilung Goldschmidtstrasse 100 Postfach 10 14 61, D-4300 Essen 1 (DE)**

EP 0 199 227 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Entfernen von auf Fasern, Garnen oder flächigen textilen Materialien befindlichen Siliconen durch Einwirkung von wäßrigen Zubereitungen, die Netzmittel und Alkalicarbonat enthalten können.

Silicone werden in immer größerem Ausmaß zur Oberflächenbehandlung von Fasern, Garnen oder flächigen textilen Materialien eingesetzt. Dabei werden die Silicone insbesondere zur Hydrophobierung von Textilien verwendet. Die mit Siliconen behandelte Ware erhält dabei häufig einen weichen und geschmeidigen Griff. Behandelt man Garne mit Siliconen, insbesondere Siliconölen, wird die Faser/Metall-Reibung herabgesetzt.

Als Silicone werden entweder die flüssigen bis pastösen kettenförmigen Dialkylpolysiloxane, insbesondere Dimethylpolysiloxane, die auf der Faser fixierbaren Methylwasserstoffpolysiloxane sowie auf der Faser auskondensierbare Siliconharze, welche trifunktionelle Siliciumeinheiten enthalten, verwendet.

Von besonderem Vorteil ist dabei, daß die Organosilicone sich nur schwer von der Faser wieder entfernen lassen, so daß die Siliconimprägnierung wasch- und reinigungsfest ist. Diese erwünschte Eigenschaft kann jedoch sehr stören, wenn ein Abziehen der Siliconimprägnierung bei Fehlchargen in der Praxis erforderlich wird. In "Chemie und Technologie der Silicone" von Walter Noll, Verlag Chemie GmbH, 2. Auflage, 1968, Seite 512, wird angegeben, daß man den Siliconfilm in der Hitze sauer zersetzen soll, wobei eine Kombination mit lösungsmittelhaltigen Waschmitteln vorgesehen werden kann. Es ist verständlich, daß ein derart aggressives Vorgehen häufig zur Schädigung der Fasern führen kann.

Es ist ferner bekannt, eine Siliconimprägnierung von textilen Materialien dadurch zu entfernen, daß man die textilen Materialien mit wäßrigen Zubereitungen behandelt, welche waschaktive Substanzen, Oxalsäure und Soda enthalten (s. Merkblätter der Firmen Bayer AG (Perlit SI-SW) und Rotta (Ro-Ma-Silikon 402/403)). Diese Arbeitsweise ist zwar etwas schonender, sie gestattet aber auch nicht die vollständige Entfernung der Silicone von den textilen Oberflächen und versagt insbesondere dann, wenn die Silicone zu Produkten mit hohem Molekulargewicht vernetzt sind.

Aus der JP-A-8 076 160 ist es bekannt, Fluorpolymere enthaltende Ausrüstungen von Polyester-, Polyamid- oder Baumwollgeweben durch Behandlung der Gewebe mit Alkali und einer grenzflächenaktiven, quaternären Ammoniumverbindung, z. B. Trimethyllaurylammoniumchlorid, zu entfernen. Derartige Fluorpolymere sind meist Perfluoralkanolester von Polyacrylaten. Diese lassen sich durch eine solche Behandlung verseifen und ablösen. Generell kann man aber aus dem Verhalten von Fluorpolymeren nicht auf das Verhalten von Siliconen schließen, da hierfür die Unterschiede in der Reaktivität und bei den Abbaureaktionen zu groß sind.

Der Erfindung liegt deshalb die Aufgabe zugrunde, ein Verfahren zu finden, welches es unter möglichst schonenden Bedingungen gestattet, Siliconimprägnierungen von der Oberfläche von Fasern, Garnen oder flächigen textilen Materialien zu entfernen. Die so behandelten textilen Materialien sollen dann wieder ein Benetzungsverhalten wie vor der Imprägnierung aufweisen, um sie gegebenenfalls weiteren Behandlungen, z. B. einer neuen oder nuancierenden Einfärbung, zu unterziehen.

Überraschenderweise wurde gefunden, daß diese Aufgabe erfindungsgemäß dadurch gelöst werden kann, daß man Zubereitungen, welche grenzflächenaktive Äquilibrierungskatalysatoren für Organosiloxane in Mengen von 0,2 bis 5 Gew.-%, bezogen auf die wäßrige Zubereitung, sowie waschaktive Substanzen enthalten, verwendet, die Zubereitung auf die Substrate bei Temperaturen von $\geq 20°C$ während eines Zeitraumes von 30 Minuten bis 2 Stunden einwirken läßt und dann die so behandelten Substrate zur Entfernung der Siliconreste spült.

Unter Äquilibrierungskatalysatoren sind dabei Verbindungen zu verstehen, welche in der Lage sind, Siloxanbindungen zu spalten und wieder zu schließen.

Die bei dem erfindungsgemäßen Verfahren zu verwendenden Äquilibrierungskatalysatoren sind noch insofern besonders ausgewählt, daß sie grenzflächenaktive Eigenschaften aufweisen müssen. Sie sollen insbesondere in maximal 1-%-iger Lösung die Oberflächenspannung des Wassers auf einen Wert $\leq 50$ mN . m$^{-1}$ erniedrigen.

Die grenzflächenaktiven Äquilibrierungskatalysatoren können dabei verschiedenen Verbindungsklassen angehören. Dabei sind besonders bevorzugt.

a) organische Sulfonsäuren, wie z. B. die Alkansulfonsäuren, wobei insbesondere die Octansulfonsäure bevorzugt ist. Weiter sind Alkylarylsulfonsäuren bevorzugt, wobei der Alkylrest 8 bis 18, insbesondere 8 bis 12 Kohlenstoffatome aufweisen soll. Als Alkylarylsulfonsäuren haben insbesondere Octylbenzolsulfonsäure, Nonylbenzolsulfonsäure und Dodecylbenzolsulfonsäure besonders gute Eigenschaften bei ihrer Verwendung im erfindungsgemäßen Verfahren. Gut geeignet sind ferner die Schwefelsäurehalbester langkettiger Alkohole, z. B. Dodecylschwefelsäureester.

b) Phosphorsäurepartialester aliphatischer Alkohole mit 3 bis 15 Kohlenstoffatomen oder gegebenenfalls alkylsubstituierter Phenole. Beispiele solcher Phosphorsäurepartialester sind Phosphorsäuremono- und -diester von Propyl-, Isopropyl-, Butyl-, Isobutyl-, Pentyl-, Isopentyl-, Octyl-, Isooctyl-, Decyl-, Isodecyl-, Lauryl-, Isotridecylalkohol oder die Phosphorsäurepartialester von Octyl-, Nonyl- oder Dodecylphenolen. Dabei können die Phosphorsäurepartialester durchaus geringe Mengen von Phosphorsäuretriestern enthalten. Jedoch sollte der Gehalt an Triestern 3 Gew.-% nicht übersteigen.

c) grenzflächenaktive organische Ammoniumverbindungen, insbesondere von Stearyldimethylbenzylammoniumhydroxid, Distearyldimethylammoniumhydroxid und Tricaprylmethylammoniumhydroxid.

In den beim erfindungsgemäßen Verfahren zu verwendenden wäßrigen Zubereitungen sollen die grenzflächenaktiven Äquilibrierungskatalysatoren in Mengen von 0,2 bis 5 Gew.-%, bezogen auf die wäßrige Zubereitung, enthalten sein. Besonders bevorzugt sind dabei Zubereitungen mit einem Gehalt von 0,5 bis 2 Gew.-% an Äquilibrierungskatalysatoren.

Die Löslichkeit der grenzflächenaktiven Äquilibrierungskatalysatoren nimmt mit steigender Kohlenstoffanzahl der Alkyl-, Aryl- oder Alkylarylreste ab. Um die Katalysatoren dennoch in der wäßrigen Zubereitung lösen oder zumindest feindispers verteilen zu können, kann es deshalb erforderlich sein, der wäßrigen Zubereitung Hilfslösungsmittel oder Dispergiermittel zuzusetzen. Beispiele derartiger Hilfslösungsmittel sind niedere, wasserlösliche Alkohole, insbesondere Isopropanol. Als Dispergiermittel sind wasserlösliche Anlagerungsprodukte des Ethylenoxids an Alkylphenole, wie Nonylphenol oder Tridecylalkohol, besonders geeignet. Mitunter genügt jedoch bereits die in den Zubereitungen meist enthaltene waschaktive Substanz oder das in der Zubereitung enthaltene Netzmittel, um die Katalysatoren in der wäßrigen Zubereitung zu dispergieren. Es ist auch möglich, den Gehalt an waschaktiver Substanz oder Netzmittel zu erhöhen, um die gewünschte Solubilisierung oder Feinverteilung zu erhalten.

Zum Ablösen der Silicone von den textilen Materialien werden die textilen Materialien in die wäßrige Zubereitung gegeben und in dieser bei Temperaturen von 20°C oder höher bewegt. Die Obergrenze der Temperatur ist dabei im wesentlichen durch die Temperaturbelastbarkeit des textilen Materials gegeben. Es empfiehlt sich aber, in der Regel die Behandlung der textilen Materialien bei erhöhten Temperaturen, z. B. 40 bis 95°C, vorzunehmen. Die Einwirkungsdauer der Flotte auf die Textilien beträgt 30 Minuten bis 2 Stunden, insbesondere 45 Minuten bis 90 Minuten. Das Verfahren kann dabei in Waschmaschinen, die in der Textilindustrie üblich sind, z. B. sogenannten Breitwaschmaschinen, durchgeführt werden.

Nach der Einwirkung der wäßrigen Zubereitungen und deren Abpumpen muß das textile Material gründlich gespült werden, um die Zubereitung und die in ihr verteilten Siliconreste völlig zu entfernen.

In den folgenden Beispielen wird das erfindungsgemäße Verfahren näher gezeigt und ein Vergleich mit einem Verfahren des Standes der Technik durchgeführt.

**Beispiel 1** (erfindungsgemäß)

Bei der Hydrophobierung eines Baumwollstoffes mit einer Siliconemulsion auf der Basis von Methylhydrogenpolysiloxan traten Siliconflecken auf, die erst nach der Kondensation bemerkt wurden.

Der verfleckte Stoff wird auf einer Breitwaschmaschine erfindungsgemäß mit einer Zubereitung von

0,3 Gew.-% Didecyldimethylammoniumchlorid
0,5 Gew.-% Dicocosalkyldimethylammoniumchlorid
0,5 Gew.-% Lauroylamidopropyl-N-dimethylaminoessigsäure
0,3 Gew.-% Natronlauge (30-%-ig)

bei einem Flottenverhältnis von 1 : 30 30 Minuten lang bei 95°C behandelt. Anschließend wird gut gespült und abgesäuert. Nach dem Trocknen sind keine Flecken mehr erkennbar.

Bei der Überprüfung der Wasseraufnahme im Beregnungstest nach Bundesmann zeigen sich die folgenden Ergebnisse:

| | |
|---|---|
| vor dem Imprägnieren: | 72 % |
| nach dem Imprägnieren: | 9 % |
| nach der erfindungsgemäßen Behandlung: | 70 % |

Der behandelte Stoff kann anschließend neu hydrophobiert werden.

**Beispiel 2** (nicht erfindungsgemäß)

Der mit Siliconflecken verschmutzte Stoff von Beispiel 1 wird dem Stand der Technik nach auf einem Jigger bei 50 bis 60°C eine Stunde lang mit einer Flotte von

0,5 Gew.-% Oxalsäure
0,3 Gew.-% Ammoniumsulfat
0,3 Gew.-% nichtionogenem Waschmittel, z. B. Nonylphenolpolyglykolether

(Flottenverhältnis 1 : 30) gewaschen. Anschließend wird durch Überlaufen gespült und erneut mit

0,5 Gew.-% Soda
0,5 Gew.-% nichtionogenem Waschmittel

eine Stunde lang bei Kochtemperatur behandelt. Nach dem Spülen durch Überlauf wird neutralisiert und im letzten Spülbad mit Essigsäure abgesäuert. Der getrocknete Stoff zeigt nach dieser Behandlung immer noch deutliche Siliconflecken.

Im Beregnungstest nach Bundesmann werden die folgenden Werte für die Wasseraufnahme ermittelt:

vor dem Imprägnieren: 72 %
nach dem Imprägnieren: 9 %
nach der Behandlung: 23 %

Aufgrund der immer noch merklichen Hydrophobie ist auch ein Umfärben der verfleckten Ware nicht möglich.

**Beispiel 3** (erfindungsgemäß)

Bei der Ausrüstung eines Jerseystoffes aus Wolle/Polyacryl mit einer Siliconelastomerdispersion in einer Jetanlage traten deutliche Siliconflecken auf, die nach dem Trocknen auch in der chemischen Reinigung mit Perchlorethylen nicht zu entfernen waren. Durch eine Behandlung der verfleckten Ware im Jet mit einer Zubereitung von

0,2 Gew.-% Na-dodecylbenzolsulfonat
0,3 Gew.-% Na-alkylphenolethersulfat
0,2 Gew.-% Ammoniumcumolsulfonat
0,1 Gew.-% Phosphorsäure

(Flottenverhältnis 1 : 10) über einen Zeitraum von 30 Minuten bei 95°C und anschließendem gründlichen Spülen können die Siliconabscheidungen vollständig entfernt werden.

**Beispiel 4** (erfindungsgemäß)

Durch Siliconablagerungen an Maschinenteilen bildeten sich bei der Ausrüstung von Baumwoll/Polyester-Cord mit hochmolekularen Siliconweichmachern und Vernetzern auf der Ware Siliconflecken, die vom Ausrüster trotz verschiedenster Versuche mit üblichen Abziehverfahren nicht zu entfernen waren.
Eine 30 minütige Wäsche bei 95°C und einem Flottenverhältnis von 1 : 20 mit einer Zubereitung, bestehend aus:

0,5 Gew.-% Cocosalkyldimethylbenzylammoniumchlorid
0,1 Gew.-% Cocosalkyltrimethylammoniumchlorid
0,1 Gew.-% Tricaprylmethylammoniumchlorid
0,1 Gew.-% Distearyldimethylammoniumchlorid
0,3 Gew.-% Natriumhydroxid (30-%-ig)
0,3 Gew.-% nichtionogenem Waschmittel auf der Basis Nonylphenolpolyglykolether und PEO-Sorbitanmonolaurat

mit anschließendem Spülen und Absäuern entfernt die Siliconflecken restlos.
Der Cordstoff kann anschließend erneut veredelt werden.

**Patentansprüche**

1. Verfahren zum Entfernen von auf Fasern, Garnen oder flächigen textilen Materialien befindlichen Siliconen durch Einwirkung von wäßrigen Zubereitungen, die Netzmittel und Alkalicarbonat enthalten können, dadurch gekennzeichnet, daß man Zubereitungen, welche grenzflächenaktive Äquilibrierungskatalysatoren für Organosiloxane in Mengen von 0,2 bis 5 Gew.-%, bezogen auf die wäßrige Zubereitung, sowie waschaktive Substanzen enthalten, verwendet, die Zubereitung auf die Substrate bei Temperaturen von ≧ 20°C während eines Zeitraumes von 30 Minuten bis 2 Stunden einwirken läßt und dann die so behandelten Substrate zur Entfernung der Siliconreste spült.

2. Verfahren nach Anspruch 1 dadurch gekennzeichnet, daß man Zubereitungen verwendet, welche als Äquilibrierungskatalysatoren Alkyl- oder Alkylarylsulfonsäuren enthalten.

3. Verfahren nach Anspruch 1 dadurch gekennzeichnet, daß man Zubereitungen verwendet, welche als Äquilibrierungskatalysatoren Phosphorsäurepartialester aliphatischer Alkohole mit 3 bis 15 Kohlenstoffatomen oder gegebenenfalls alkylsubstituierter Phenole enthalten.

4. Verfahren nach Anspruch 1 dadurch gekennzeichnet, daß man Zubereitungen verwendet, welche als Äquilibrierungskatalysatoren quaternäre Ammoniumverbindungen enthalten.

**Revendications**

1. Procédé pour enlever des silicones se trouvant sur des fibres, des filés ou des étoffes textiles, par action de préparations aqueuses pouvant contenir des mouillants et des carbonates de métaux alcalins, caractérisé en ce qu'on utilise des préparations contenant des catalyseurs d'équilibrage tensioactifs pour des organosiloxanes, en des quantités de 0,2 à 5 % en poids par rapport à la préparation aqueuse, de même que des substances actives de détergence, on laisse agir les préparations sur les substrats à des températures ≥ 20°C pendant un laps de temps de 30 minutes à 2 heures, puis on rince les substrats ainsi traités, pour éliminer les résidus de silicone.

2. Procédé selon la revendication 1, caractérisé en ce qu'on utilise des préparations contenant comme catalyseurs d'équilibrage des acides alkyl- ou alkylarylsulfoniques.

3. Procédé selon la revendication 1, caractérisé en ce qu'on utilise des préparations contenant comme catalyseurs d'équilibrage des esters partiels d'acide phosphorique et d'alcools aliphatiques ayant de 3 à 15 atomes de carbone, ou de phénols éventuellement substitués par un ou plusieurs radicaux alkyle.

4. Procédé selon la revendication 1, caractérisé en ce qu'on utilise des préparations contenant comme catalyseur d'équilibrage des composés de l'ammonium quaternaire.

## Claims

1. Process for removing silicones from fibres, yarns or sheetlike textile materials by the action of aqueous preparations which may contain wetting agents and alkali metal carbonate, characterized in that use is made of preparations which contain surface-active equilibration catalysts for organosiloxanes in amounts from 0.2 to 5 % per weight, based on the aqueous preparation, and active detergent substances, the preparation is allowed to act on the substrates at temperatures of $\geqslant$ 20°C for a period of 30 minutes to 2 hours, and the substrates thus treated are then rinsed to remove the silicone residues.

2. Process according to claim 1, characterized in that use is made of preparations which contain alkyl- or alkylaryl-sulphonic acids as equilibration catalysts.

3. Process according to claim 1, characterized in that use is made of preparations which contain phosphoric partial esters of aliphatic alcohols of 3 to 15 carbon atoms or of unsubstituted or alkylsubstituted phenols as equilibration catalysts.

4. Process according to claim 1, characterized in that use is made of preparations which contain quaternary ammonium compounds as equilibration catalysts.